Europäisches Patentamt

European Patent Office

Office européen des brevets

(19)

(11) Publication number : **0 385 639 B1**

(12) **EUROPEAN PATENT SPECIFICATION**

(45) Date of publication of patent specification :
29.09.93 Bulletin 93/39

(51) Int. Cl.⁵ : **B60C 3/04, B60C 9/28**

(21) Application number : **90301837.2**

(22) Date of filing : **21.02.90**

(54) **High-speed radial tyre for heavy load.**

(30) Priority : **25.02.89 JP 44340/89**

(43) Date of publication of application :
**05.09.90 Bulletin 90/36**

(45) Publication of the grant of the patent :
**29.09.93 Bulletin 93/39**

(84) Designated Contracting States :
**DE FR GB**

(56) References cited :
**EP-A- 0 292 563**
**GB-A- 2 092 964**
**GB-A- 2 198 996**

(73) Proprietor : **SUMITOMO RUBBER INDUSTRIES LIMITED**
**1-1 Tsutsuicho 1-chome Chuo-ku**
**Kobe-shi Hyogo-ken (JP)**

(72) Inventor : **Takatsu, Mikio**
**1-12-18 Takatsukasa**
**Takarazuka-shi Hyogo-ken (JP)**
Inventor : **Yoshikawa, Hideaki**
**2-23-54-627 Nishimaiko Tarumi-ku**
**Kobe-shi Hyogo-ken (JP)**
Inventor : **Ueyoko, Kiyoshi**
**2-20-2 Fukae-minami Higashinari-ku**
**Osaka-shi Osaka-fu (JP)**
Inventor : **Yonekawa, Yasusuke**
**1-8 Koshienguchi 1-chome**
**Nishinomiya-shi Hyogo-ken (JP)**

(74) Representative : **Stewart, Charles Geoffrey**
**SP TYRES UK LIMITED Tyre Technical Division**
**Fort Dunlop, Erdington, Birmingham B24 9QT (GB)**

EP 0 385 639 B1

## Description

This invention relates to a high speed radial tyre for heavy loads.

As the size and the flight speeds of aircraft have increased, the operating speed and the loads on tyres have increased. Thus improved durability is required in high speed radial tyres for heavy loads especially in tyres for aircraft to allow safe take off and landing.

A tyre for an aircraft must meet various special characteristics as will be mentioned below in addition to durability of every part of the tyre such as wear resistance rolling resistance low heat generation characteristics and the like. The special characteristics are:-

1. To have resistance to a succession of large deformations which deformation may often be as large as 28 to 38%, for example, in the loaded state in order to effectively absorb the shock when an aircraft takes off or lands on a runway strip.

2. To have a resistance against high speed rotation under heavy load and large deformation, since the take off and landing speed has become very high

3. To be able to resist taxi-ing conditions when moving between the runway strip and the gate, where a large load acts for a relatively long time albeit at lower speed.

4. To have resistance to a load of approximately 130 to 360 time (approximately 50 times in a normal tyre) per unit weight of the tyre to reduce weight in the aircraft, and thus a significantly high internal pressure such as 10 to 16 kg/sq.cm needs to be used.

On the other hand tyres having a cross ply construction in which the carcass cords are mutually crossed between the plies are widely used. However, due to their smaller rigidity in the tread and their heavier weight as well as due to poor wear resistance and high heat generating characteristics cross ply tyre constructions are limited in use particularly for recent large sized jet propelled aircraft of high weight and performance.

Therefore, recently, radial tyres having a belt layer composed of belt cords with a high elasticity inclined at a small angle to the equator of the tyre and outside a carcass which has a radial or semi radial construction where the carcass cords are placed in the radial direction of the tyre are used more and more.

However, it has been found that such radial tyres for aircraft have a relatively lower durability in the bead zone compared with the durability of the rest of the tyre. It has also been found that standing waves tend to be generated at speed.

In regard to the durability in the bead zone since the amount of deformation in the radial direction of the tyre under loading is as large as 28 to 35% as mentioned before, a compressive stress acts on the carcass A in the bead zone in the folded part about the bead core B, as shown in Fig. 8, and it is evident that in the inside in the direction of the tyres axis, a tension which tensions the carcass cords is generated.

On the other hand, it is found that damage to the bead zone occurs near the top end of the rim flange C. From a drum test, it was found that as the bead zone bends onto the top edge D of the rim flange C, which extends outwardly in the axial direction, a compression is generated in the sharp bend which generates a centralised stress to the compression. Thus the bead zone is damaged or even broken by fatigue resulting from the succession of compressive strains caused by the large compressive stress which acts on the carcass cords. Any break promotes the concentration of the compressive stress to specific parts and real damage in the bead zone is generated. Note that the bending increases the contact pressure of the bead against the top edge D, and as the contact pressure increases, the compressive stress and damage increase.

Moreover, the standing wave is a wave phenomenon in the tread part in use of a tyre, and such waves in the tread part reduce the tyres durability, especially by exciting the bead through the side wall to lower the durability.

In a heavy load carrying high speed radial tyre for an aircraft, as mentioned before, since the deformation is significant and the take off and landing speeds are as high as 300 km/h or more such standing waves tend to be generated. As is generally known, the speed for standing waves in a radial tyre can be obtained from the formula (1).

$$Vc = \sqrt{T/m + 2\sqrt{E1 \cdot k/m}} \quad (1)$$

where

Vc: critical speed of standing wave generation

m: mass of unit length in tread part

E1: bending rigidity in tyres surface in tread part

T: tension of belt

k: spring constant of carcass

The formula (1) was obtained by treating the belt layer as an infinite beam supported elastically by the carcass, and it is known that in order to improve the critical speed Vc for generating standing waves, the mass m should be lowered and the rigidity E1, tension of belt T and spring constant of carcass k should all be increased.

Meanwhile, in order to increase the specified frequency of the belt and to improve the critical speed Vc of generating standing waves without decreasing the mass m, it was proved that a larger tension T should be applied to the belt by filling with a greater pressure, and thereby the apparent bending rigidity E1 in the tyres surface in the tread part is increased and the critical speed Vc raised.

In addition while in the formula (1), it is supposed that an equal tension T acts on the belt layer, it was also found by experiments that by applying a larger expansion in the equatorial part of a tyre, that is in the crown of the tread it is possible to increase the critical speed for standing waves by the tension of the belt T in this part being increased relatively.

For this purpose, the radius of the inner circumference of the tread part, especially that of the belt layer is preferably set smaller and the amount of the belt camber larger compared to conventional tyres, and in the case where the radius of the sidewall is set approximately the same as in conventional tyres, this helps to lower the contact pressure to the flange of the bead and it is also known that this acts to improve the durability of the bead.

Moreover, in addition to the above, it was found that an increase in expansion in the crown causes an effect to help equalise the distribution of ground contact pressure in the tread surface.

A radial ply tyre for aircraft having all of the features of the preamble of claim 1 is disclosed by British Patent Publication GB-A-2092964.

It is the object of the invention to provide high speed radial tyres for heavy loads which has improved durability in the bead and an increased critical speed for generating standing waves.

Accordingly the invention provides a high speed radial tyre for heavy loads comprising a carcass composed of at least one carcass ply which has carcass cords inclined at an angle of 70 to 90 degrees to the tyre's equator and extending from a tread part through a sidewall part and folded around a bead core in each of two bead parts and a belt layer composed of a plurality of belt plies which are placed radially outside the carcass and inside the tread part wherein when the tyre is mounted on a standard rim and inflated to its standard internal pressure, the equator height defined as the height in the radial direction of a crossing point where the inner surface of the belt layer in the radial direction intersects the surface of the tyre's equator is larger than the outer end height defined as the height in the radial direction at the outermost end of the inner surface of the belt layer in the tyre's axis direction and the belt camber quantity defined as difference between the equator height and the outer end height is 6% or more of the belt width defined as the length between the outer ends of the inner surface of the belt layer in the axial direction of the tyre, characterised in that the carcass cords are made of an elastic cord having a stretch S5 (%) at 5kg load of 5 to 10, a stretch S10 (%) at 10kg load of 9 to 15 and a stretch S20 at 20kg load of 14 to 20.

An embodiment of the present invention will now be described by way of example, referring to the attached drawings, in which:

Figure 1 is a sectional view showing one of the embodiments of the invention;

Figure 2 is a diagram showing characteristics of a breaker and a carcass in comparison with a conventional tyre;

Figure 3 is a section view showing the bead part;

Figures 4(A) and (B) are diagrams showing the characteristics of cords;

Figure 5 is a diagram explaining the initial elasticity;

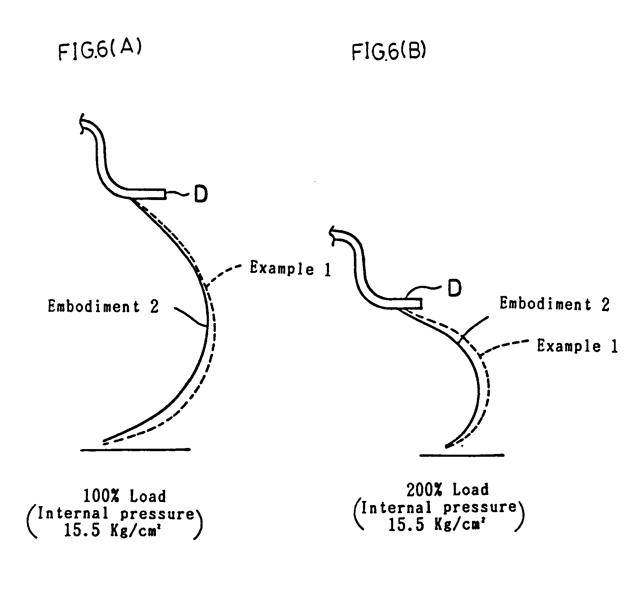

Figures 6(A) and (B) are diagrams showing the deformation profile;

Fig.7 is a diagram showing an example of measured results of the contact pressure, and

Fig.8 is a diagram showing an example of deformation in the bead

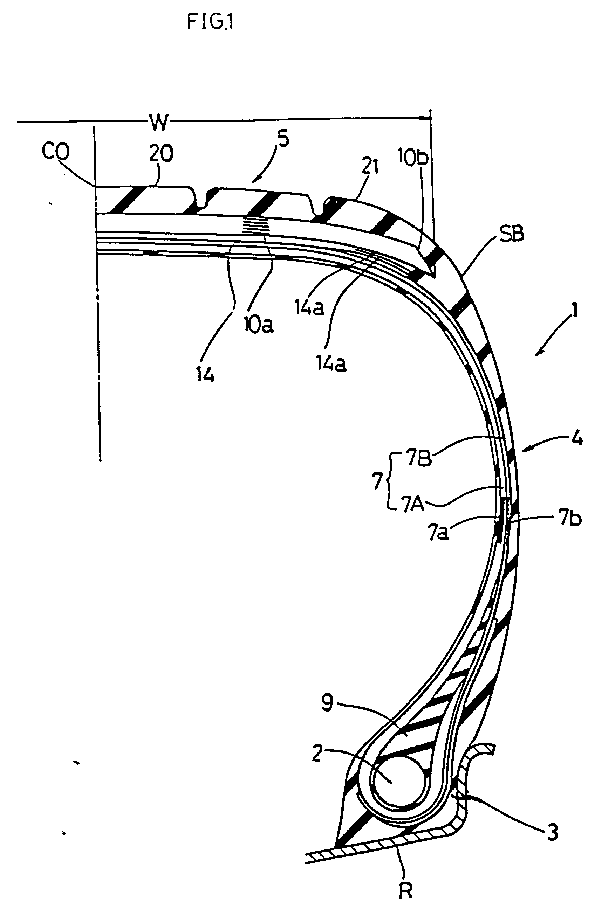

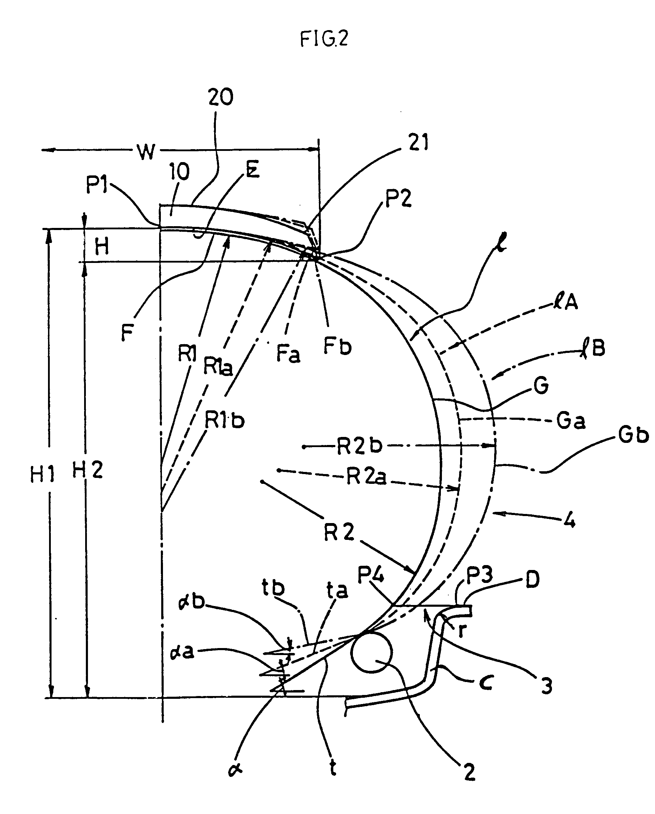

Briefly the tyre comprises in Fig.1 & 2 a belt layer and at the centre line of the carcass compared to a conventional tyre the tyre has a belt camber quantity H when mounted on its specified rim and filled to its specified internal pressure which is 6% or more of the belt width W. Thus, in the inner surface E of the belt layer 10, as the carcass 7 is curved along the inner surface E, the radius of curvature R1 of the inner surface F at the outer centre 1 ine of the carcass 7 along the inner surface E is smaller than the radii of curvature R1a and R1b of the curved surfaces Fa and Fb in a conventional tyre 1A and 1B shown by a dotted line and a single dot broken line respectively in Fig. 2. As a result, in the tyre of the invention the crown part 20 is positioned relatively outwardly compared to the shoulder part 21, and thus, the belt tension T generated by centrifugal force in the crown part 20 due to high speed rotation becomes relatively larger than the belt tension T in the shoulder parts 21 due to the larger radius.

Such an increase in belt tension in the crown part 20 improves, as mentioned before, the critical speed standing waves as well as controlling their generation.

In addition, by thus reducing the radius of curvature R1, the curved surface G which has a radius of curvature R2 smoothly connecting to the curved surface F with the radius of curvature R1 along the inner surface E of the belt layer 10 and continuing from the side-wall 4 to the bead core 2 is positioned inwards of the curved surfaces Ga and Gb of the conventional tyre, and the angle formed by a tangent line t contacting the bead core 2 and the surface is made larger to stand up the tangent compared with tangent lines at and tb of the conventional tyre. This is because the curved surfaces G, Ga and Gb are set as curves smoothly continuing between the curved surfaces F, Fa and Fb and the bead 3 based on the natural equilibrium theory, and thus, the curved surfaces F, Fa and Fb come to have approximately the same radii of curvature R2, R2a and R2b.

Therefore, on bending of the bead 3 by deformation of the bead 3 caused by a load on the tyre, since the curved surface F of the carcass 7 is inwards in the tyre, compared to the carcass of a conventional tyre, the bending of the bead over the top D of the rim flange parallel to the direction of the tyre axis is reduced and the bending rate is lowered. This causes a lowering of the contact pressure to the top edge D. Such a reduction in contact pressure between the bead part 3 and the rim flange reduces the bending stress caused in the bead thus reducing the compressive stress acting on the folded part of the carcass caused by the bending stress, and thereby improving the durability of the bead.

Furthermore, when elastic cords having a large expandability under load are used as the carcass cords, a tension can be added to the carcass cord, as well as an internal pressure, by previously applying a high expansion. Such a tension reduces the compressive stress acting on the carcass cords in the region of the rim flange. Therefore, the generation of stress in this part due to deformation which is accompanied by compression and even breakage by fatigue can be further prevented, thus preventing the generation of a concentration of stress in the bead and thereby improving the durability of the bead.

Moreover, by inflating to the specified pressure, expansion of the tread is larger especially in the crown area 20, which increases the tension T of the belt layer in that part and improves the apparent rigidity E1 of the tread, and thereby, the critical speed of generating standing waves and the generation is controlled. Thus, the successive stress in the bead and the deformation which transmits the standing waves through the sidewalls to the beads can be prevented, and the durability of the beads is improved.

If a convention cord is used, in addition to the compressive stress in the sectional direction of the folded part of the carcass cord in the bead part, a complex stress is applied by the standing waves whereas when the standing waves are penetrated as is the case when an elastic cord is used, the durability of the bead part is much improved.

The embodiment will now be described in greater detail.

The tyre 1 shown in Fig. 12. is a 46 x 17R20 aircraft radial tyre which is mounted on a standard rim R and inflated to its standard internal pressure. The tyre 1 comprises a bead part 3 having a bead core 2 and a sidewall 4 extending outwardly from the bead 3 to a tread part 5 which connects the outer ends of the two sidewalls 4.

In addition there are in the tyre 1, a carcass 7 having an inner layer 7A composed of a plurality for example, four carcass plies 7a each of which is folded around the bad core 2, the sectional surface of which is approximately circular from the inside to the outside of the tyre and an outer layer 7B composed of a plurality for example, two carcass plies 7b and 7b which surround the folded parts of the inner layers 7A and wrap around it from the outside of the tyre. Each of they carcass plies 7a and 7b has its cords positioned in the radial direction to the tyres equator CO at an inclination of 70 to 90 degrees, and in the carcass 7 of the embodiment the carcass cords in each ply are mutually crossed and inclined to the radial direction of the tyre between the adjoining carcass plies.

Over the bead core 2, a bead apex 9 composed of a tapered rubber member extending in the radial direction of the tyre is formed to improve the rigidity and disperse stress caused by bending of the folded part of the carcass. In the outer surface of the bead part 3, a chafer (not shown) may be placed to prevent the rim from chafing the bead surface.

In the tread 5, a belt layer 10 is constructed radially outside the carcass 7, and inside the tread having an inclination of its cords of 0 to 20 degrees, preferably 0 to 5 degrees to the centreline of the tyre. Between the belt layer 10 and the carcass 7, one or more layers of cut breakers 14 are positioned with an inclination of their cords of 5 to 40 degrees to the centreline of the tyre which improves the cornering force characteristic. By forming the cut breaker plies 14 outside the belt layer 10, they provide the cornering force characteristics and function also as a protective layer for the belt layer 10. They may be positioned both inside and for outside the belt layer 10.

Moreover, the belt layer 10 is composed of six to ten plies 10a, and by arranging the belt plies 10a to gradually lessen in width outwardly in the radial direction, the belt layer 10 forms a pedestal shape in cross section and each side surface 10b is an inclined surface approximately parallel to the outer surface SB of the tyre buttress. The width W of the belt layer 10, that is, the maximum width of the belt layer 10, which is the width of the innermost ply 10b in the embodiment, is set at 75 to 85% of the overall width of the tyre.

In Fig.2, the equator height H1 which is the height from the bottom surface of the bead in the radial direction of an equator point P1, where the inner surface E of the belt layer in the radial direction crosses the equatorial plane of the tyre CO, is larger than the outer height H2 which is the height in the radial direction at the outermost point of the inner surface in the direction of the tyres axis and thus at an outer end point P2 of the belt 10. The difference between the equator height H1 and the outer end height H2, (H1 - H2), that is the belt camber quantity H is set at 6% or more of the belt width W which is the length between the two outer end points P2 in the direction of the tyres' axis.

This is different from a conventional high speed radial tyre for heavy load where the ratio of the belt camber quantity H to the belt width is 5.5% or less.

Thus in the tyre of the invention the radius of curvature R1 of the curved surface F of the centre line passing through the middle position of the thickness of the carcass 7 along the inner surface E of the belt layer is made smaller than the radii of curvature R1a and R1b of the curved surfaces Fa and Fb of a conventional tyre where the camber quantity H is smaller as shown by a dotted line and a single dotted broken line in Fig.2 respectively.

As mentioned before, by this construction, the crown part 20 extends relatively outwardly in the radial direction compared with the shoulder part 21, and the tension T generated by centrifugal force in the central part 20 during high speed rotation of the tyre relatively increases compared to a shoulder part 21. This is used to improve the critical speed of generating standing waves.

The tyre 1 having the belt layer 10 with such a small radius of curvature R1 is formed by moulding using a vulcanising mould with a relatively small radius of curvature in the tread surface region.

In addition, in regard to the carcass 7, its vulcanising mould is made so that a smooth curved surface is formed between the outer end point P2 and the bead core 2 based on the natural equilibrium theory. Thus, the radius of curvature R2 of the curved surface G centralised by the side-wall part 4 in the tyre of the invention based on the natural equilibrium theory and the radii of curvature R2a and R2b of the curved surfaces Fa and Fb of conventional tyres IA and IB based also the natural equilibrium theory have approximately an equal size, and therefore, the curved surface F of the carcass 7 of the tyre 1 of this invention settles more inwardly in the direction of the tyres axis compared to the curved surfaces Fa and Fb of conventional tyres.

As the curved surface F of the carcass 7 locates inwards in the direction of the tyres axis, as mentioned before, the curved surface F stands up more compared to the curved surfaces Fa and Fb of conventional tyres, and thus, the angle formed by a tangent line t contacting the bead core 2 and a line in the direction of the tyre axis is larger compared to the angles α a and α b formed by tangent lines ta and tb for the conventional tyres 1A and 1B.

It is evident that such a shape keeps the curved surface F off the flange of a rim R. As a result, the tyre 1 of the invention on its specified rim R and filled with its specified internal pressure, when it is deflected on loading, has much reduced contact pressure at the top edge D of the rim flange C compared to a conventional tyre.

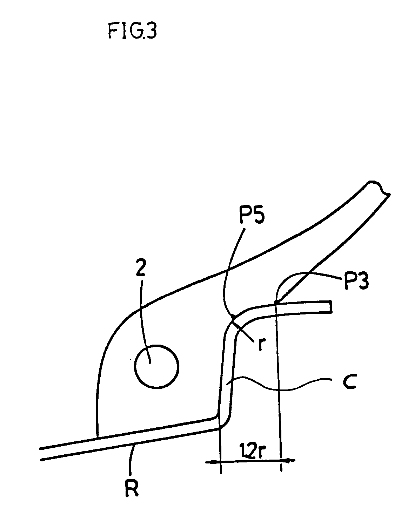

As shown in more detail in Fig.3 where the top edge D is formed horizontally and has a radius of curvature r at the top edge of the rim flange C, it is preferable that the contact pressure at a point P3 which is a distance 1.2 times the radius of curvature r from C is set at 30 kg/cm$^2$ or less, when twice the specified load is applied. With such a reduction of the contact pressure, in a folding deformation, the bending face acting on the bead part 3 because of the reaction force from the contact pressure acting on the folded part and the resultant stress acting on the carcass cord is reduced, and the durability is improved.

As mentioned above, by setting the belt camber quantity H at 6% or larger than the belt width W, it is easier to set the contact pressure at 30 km/cm$^2$ or less, and in order to obtain such a low contact pressure the bending rigidity of the bead strengthening parts such as the bead apex 9 are adjusted.

The radius of curvature R1 to obtain the standing status can be obtained from the belt camber quantity H and the belt width W.

As a result of reducing the radius of curvature R1, as shown in Fig.2, the carcass cord path I of one side which is the length in the sectional surface of the tyres axis in the carcass 7 from the crossing point P4 of a line in the direction of the tyres axis passing the upper surface of the top edge D of the flange F to the tyres equator CO is reduced by 1.5 to 4% preferably in 2.5 to 3% compared to a conventional tyre.

By employing an expansion in the middle of the shape its tread in the tyre, the shape of the ground contact surface is as a result improved.

From these points of view, the ratio is set at 8% or more, but if the ratio exceeds 20% the tyres equator part CO is made too convex, which tends to cause uneven wear and difficulty in production. Therefore, the range is 6% or more, preferably 20% or less, and more preferably 7 to 11%.

An elastic cord having a high expandability is used as the carcass cord. The elastic cord has a stretch S5 (%) of 5 to 10 (preferably between 5 and 8) at a 5kg loading. Moreover, the stretch S10 (%) is 9 to 15 (preferably between 10 and 12) at a 10kg loading, and the stretch S20% is 10 to 20 at 20 kg loading.

In a carcass cord of the other embodiment, the divided value D5 of the stretch S at 5 kg loading by the actual total denier number of the cord is 0.000735 to 0.00147. The divided value D10 of the stretch S10 at 10 kg loading by the actual total denier number of the cord and the divided value D20 of the stretch S20 at 20 kg loading by the actual total denier number of the cord are 0.00132 to 0.00221 and 0.00205 to 0.00294 respectively.

Meanwhile, the measuring method for the actual total denier number of the cord is as follows:-

A sample is accurately taken by applying the initial load to the cord so that total length is made 9m or more.

The mass is measured, the absolute dry mass being obtained by leaving it for two hours or more in a drier at a temperature of 105 degrees C + 2 degrees C and drying it until it has constant weight and the size or gauge based on corrected weight is calculated from the following formula:

$$\text{Actual total denier number d} = \frac{W'X\ 9000\ l\ (1 + Rc/100)}{l}$$

where

W' = absolute dry mass of the sample

Rc = official region (nylon 4.5%)

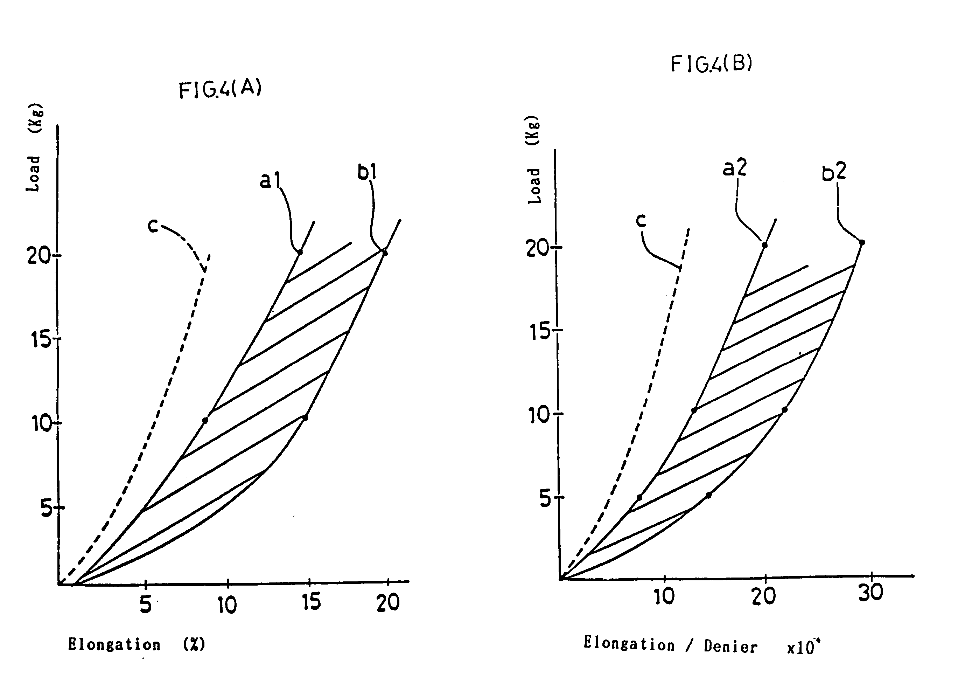

Such elastic cords, in Figs 4(A) and (B) have such characteristics between curves a1 and a2 of the lowest limit and curves b1 and b2 of the highest limit. As shown in these curves the elastic cords have such characteristics that the stretch is larger with a smaller load and the stretch ratio decreases as the load increases.

By using elastic cords having such characteristics a larger stretch is created in the carcass cords in the initial stage of inflation. When the load increases to 10kg and then to 20kg the carcass cord stretches further as the load increases, but the stretch ratio reduces accordingly.

As shown by curve c, since conventional cords form a steeper curve compared to curve a and curve c is approximately linear, when such conventional cords are used, the stretch of the carcass is more even on inflation and they are inferior in reducing compressive stress acting in deformation.

In comparison with this, since the elastic cord has a characteristic between curve a and curve b, it can improve the durability of the tyre.

S5, S10 and S20 specify the amounts of stretch of the cords upon loading, regardless of the denier number of the cord used. The other divided values D5, D10 and D20 involve the denier number, thus specifying the stretch per denier upon loading. Such cords may be used in a wide range of high speed tyres including tyres for aircraft specifying only the stretch at a specified load specified particularly tyres for aircraft and tyres for large sized jet propelled aircraft.

In addition, the initial elasticity Es (kg/.mm$^2$) of the elastic cord shoulder should be 130 more (preferably 140 or more) and less than 200.

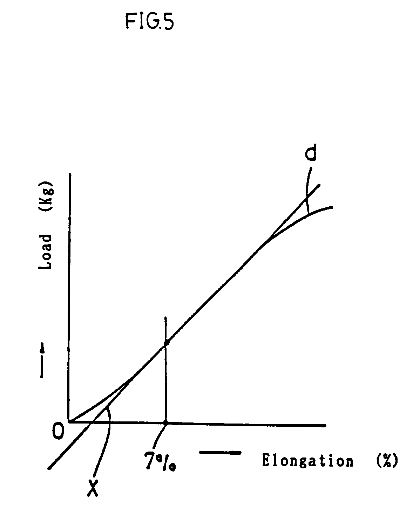

The initial elasticity Es (kg/.mm$^2$) is defined, as shown in Fig.5 as the gradient of the tangent line X of the curve d at a stretch of 7% by drawing the curve d of load (kg) and stretch (%) by using a tensile a tensile tester of the constant rate extension type. By setting the initial elasticity Es (kg/mm$^2$) at a smaller value within the range compared to a conventional cord, the stretchability of the elastic cord is improved and stretch is added to the carcass cord.

Furthermore, for the elastic cord, one or more of nylon cord, polyester cord, aromatic polyamide cord, carbon cord and metallic cord may be used separately or combined.

A cord having such physical characteristics can be obtained, when using an organic fibre cord, by greatly reducing the tension in the so-called dip stretch process where tension and heat are applied to the cord for a specified time in comparison with the tension used in the conventional dip stretch. In order to increase the characteristics, when using a nylon cord, for example, the number of twists per 10 cm is increased to 26 to 36 T/10 cm from the conventional number of twists of approximately 23 T/10 cm. It is also possible to reduce the stretchability of the whole cord by combining cords with smaller stretchability and cords with larger stretchability and applying a sagging to the cord with smaller stretchability by previously coiling it so that it bears load only when the load reaches a specified value.

By using such an elastic cord as a carcass cord, the belt layer 10 can be bulged out, when the tyre is inflated to its specified internal pressure, and the aforementioned belt camber H can be more easily obtained.

The carcass plies 7a and 7b are formed by embedding the carcass cords in base rubber. For the base rubber material that allows the characteristics of the cord in addition to strengthening and low heat generation characteristics are used. For this purpose, base material made of one or two types of natural rubber and synthetic isoprene rubber is mixed with 50 to 70 parts by weight of carbon black and those having 30 to 70 kg/sq.cm of 100% modulus and 200% or more and 500% or less elongation at breakage are preferably used. In the case of less than 50 parts by weight of carbon, the strengthening performance tends to deteriorate and in the case it exceeds 70 parts by weight, more heat tends to be generated. When the 100% modulus is less than 30 kg/sq.cm, the heat generating characteristics tends to be increased, and when it exceeds 70 kg/sq.cm, the strengthening performance tends to deteriorate. When the elongation at breakage is less than 200% the carcass us inferior in absorbing strain and rubber breakage tends to occur, and when it exceeds 500% the heat generating characteristics tends to be excessively increased.

Thus, by previously applying a larger stretch compared to a conventional tyre, upon bending of the bead part 3 in take-off or landing of an aircraft, the compressive stress of the carcass cord generated at the side of the rim flange C is reduced, thus the compressive strain is reduced, and thereby deformation, partial bending and breakage based on fatigue caused by the compressive strain are prevented. In addition, the compressive stress of the rubber itself in the bead part 3 is lowered, and the durability of the bead part is improved, for example, in more than 10%.

For the belt cord 11, as well as the cut breaker cord, materials having the same characteristics as the carcass cord in the changes of stretch by loads, and the belt cord 11 should have smaller stretch $S_5$ (%) upon 5kg loading than the carcass cord at 3 to 6 and the divided value $D_5$ (%/d) of the stretch $S_5$ (%) by the actual total denier number (d) at 0.000385 to 0.000769. As the carcass cords those having similar characteristics to belt cords are used. Cords made of different materials may also be used.

The belt cord 11 and the cut breaker 14 are embedded in the same base rubber to form the belt plies 10a and 10b and the cut breaker ply 14a.

For the belt cord 11 and the carcass cord, a relatively thick cord with the same diameter d11 such as 1260d/2 to 2700d/3 is used, and as a sub-cord, those having the same or smaller diameter are used.

In addition, the belt layer 10 may also be formed as an endless type by the so-called cord winding method where one or several cords are wound in a spiral shape.

Prototype tyres having a tyre size of 46 x 17R20 and a structure as shown in Fig. 1. were produced in specifications as shown in Table 1. The symbol A of the ply composition in the table shows the type of ply composition in Table 3. In Table 3, as cut breaker cords, the same cords as used for the belt cords were adopted. Each tyre was inflated to its specified internal pressure, and the durability was tested based on the taxi simulation test according to the US. Civil Aviation Bureau's standard TSO-C82c. the results are shown by values in the table. Numeral 61 means that the tyre ran the entire distance. Those that could bear a take-off at 200% load are marked with a circle. In tyres of embodiment 2 and comparative examples 1 and 2, the Rise of temperature was measured at the crown part shoulder part and bead part when running with 100% load and at a speed of 300km per hour. In each case, a thermocouple was inserted in the middle of the thickness, and the temperature after running for one hour was measured. The temperature in the bead part is lower in the embodiment 2.

In addition, the speed of rotation was changed, and the critical speed for generating standing waves was obtained. The embodiment could attain a speed of approximately 300km/h. The results are shown by indices, setting the index of the comparative example 1 at 100, and a higher score shows higher critical speeds.

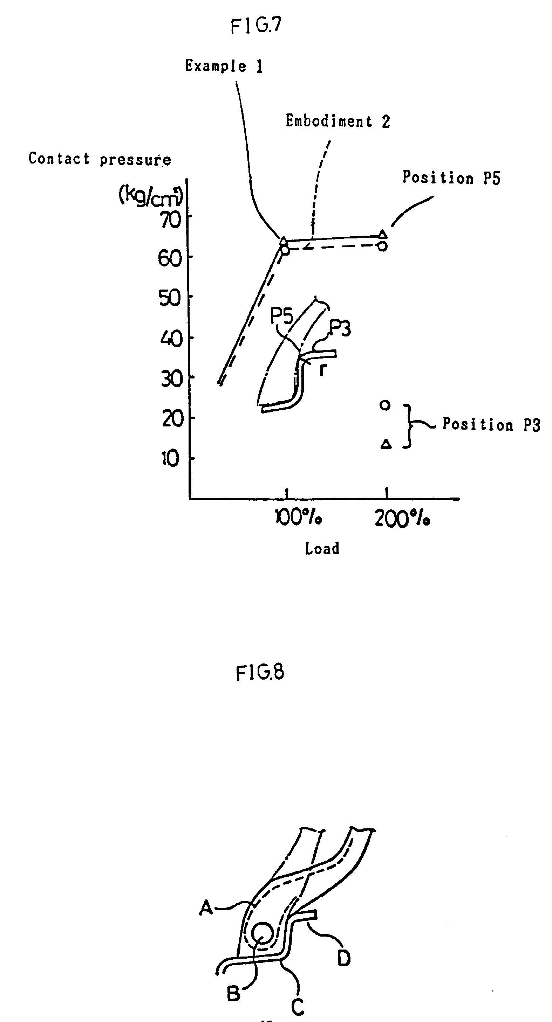

Furthermore the deformation profiles of embodiment 2 and the comparative example 3 at 100% and 200% load are shown in Figs 8(A) and (B), and the contact pressures at the point P3 on the rim flange and the point P5 in the middle of the arc r are shown in Fig. 7.

It is clearly seen that the embodiments have slightly standing shapes and are lower in contact pressure.

Further, prototypes of tyres marked embodiments 4 to 7 were produced by using plies having the specifications of B to F in table 3, and the results of the same test are shown in the table.

Thus, the tyre of the invention improves the durability of the bead part as well as increasing the critical speed for generating standing waves and controlling their generation, thereby improving the durability of the bead part.

Table 1

| | | Embodiment 1 | Embodiment 2 | Embodiment 3 | Comparative example 1 | Comparative example 2 |
|---|---|---|---|---|---|---|
| Ply composition | | A | A | A | A | A |
| Radius of curvature R1 mm | | 3 5 0 | 3 6 0 | 3 7 0 | 3 8 0 | 4 0 0 |
| Radius of curvature R2 mm | | 1 2 0 | 1 2 0 | 1 2 0 | 1 2 0 | 1 3 0 |
| Cord path mm | | 4 0 0 | 4 0 6 | 4 1 0 | 4 1 4 | 4 2 6 |
| (H1-H2)/W% | | 8.5 | 8 | 7 | 5.5 | 5 |
| Standing wave characteristic | | 1 1 0 | 1 1 0 | 1 0 4 | 1 0 0 | 9 3 |
| Durability | | ○ | ○ | ○ | 6 1 | 6 1 |
| Temperatur rise | Crown part | — | 7 9 | — | 8 0 | 8 8 |
| | Shoulder part | — | 7 1 | — | 7 2 | 5 5 |
| | Bead part | — | 7 0 | — | 7 3 | 7 8 |

Table 2

| | Embodiment 4 | Embodiment 5 | Embodiment 6 | Embodiment 7 |
|---|---|---|---|---|
| Ply composition | B | C | D | E |
| Radius of curvature R1 mm | 3 6 0 | | | |
| Radius of curvature R2 mm | 1 2 0 | | | |
| Cord path / 2 | 4 0 6 | | | |
| (H1-H2)/W% | | | | |
| Standing wave characteristic | 1 1 5 | 1 1 5 | 1 2 0 | 1 0 0 |
| Durability | ○ | ○ | ○ | ○ |
| Cornering force | 1 0 0 | 7 0 | 1 0 0 | 1 0 0 |

Table 3 (ply composition)

| Symbol | | A | B | C | D | E |
|---|---|---|---|---|---|---|
| Carcass | Number of plies | 6 | 6 | 6 | 6 | 6 |
| | Material of cord | NYLON6,6 | NYLON6,6 | NYLON6,6 | NYLON6,6 | NYLON6,6 |
| | Diameter of cord | 1890d/3 | 1890d/3 | 1890d/3 | 1890d/3 | 1890d/3 |
| | Number of twists of cord (twists/100mm) | 26 | 34 | 34 | 36 | 23 |
| | $S_5$ (%) | 6.2 | 7.7 | 7.7 | 8.0 | 4.5 |
| | $S_{10}$ (%) | 9.5 | 11.7 | 11.7 | 12.1 | 7.5 |
| | $S_{20}$ (%) | 14.7 | 17.5 | 17.5 | 18.3 | 11.2 |
| | $D_5$ (%/d) $\times 10^{-4}$ | 9.84 | 11.32 | 11.32 | 11.43 | 7.32 |
| | $D_{10}$ (%/d) $\times 10^{-4}$ | 15.08 | 17.20 | 17.20 | 17.29 | 12.20 |
| | $D_{20}$ (%/d) $\times 10^{-4}$ | 23.33 | 25.74 | 25.74 | 26.14 | 16.00 |
| | Elongation at breakage (%) | 24.8 | 26.8 | 26.8 | 27.2 | 19.6 |
| | Tention of cord (kg) | 48.2 | 43.8 | 43.8 | 42.5 | 54.0 |
| | Initial elasticity (kg/mm²) | 175 | 145 | 145 | 140 | 270 |
| Belt | Number of plies | 8 | 8 | 8 | 8 | 8 |
| | Material of cord | NYLON6,6 | NYLON6,6 | NYLON6,6 | NYLON6,6 | NYLON6,6 |
| | Diameter of cord | 1680d/4 | 1680d/4 | 1680d/4 | 1680d/4 | 1680d/4 |
| | $S_5$ (%) | 4.8 | 4.8 | 4.8 | 4.8 | 4.1 |
| | $S_{10}$ (%) | 8.2 | 8.2 | 8.2 | 8.2 | 6.8 |
| | $D_5$ (%/d) $\times 10^{-4}$ | 6.15 | 6.15 | 6.15 | 6.15 | 5.54 |
| | $D_{10}$ (%/d) $\times 10^{-4}$ | 10.51 | 10.51 | 10.51 | 10.51 | 9.19 |
| | Elongation at breakage (%) | 22.4 | 22.4 | 22.4 | 22.4 | 13.11 |
| | Tention of cord (kg) | 52.5 | 52.5 | 52.5 | 52.5 | 56.5 |
| | Initial elasticity (kg/mm²) | 234 | 234 | 234 | 234 | 320 |
| Number of cut breaker plies | | 2 | 2 | 0 | 2 | 2 |

## Claims

1. A high speed radial tyre for heavy loads comprising a carcass (7) composed of at least one carcass ply which has carcass cords inclined at an angle of 70 to 90 degrees to the tyre's equator and extending from a tread part (5) through a sidewall part (4) and folded around a bead core (2) in each of two bead parts (3) and a belt layer (10) composed of a plurality of belt plies which are placed radially outside the carcass (7) and inside the tread part (5) wherein when the tyre is mounted on a standard rim (R) and inflated to its standard internal pressure, the equator height (H1) defined as the height in the radial direction of a crossing point (P1) where the inner surface (E) of the belt layer (10) in the radial direction intersects the surface (CO) of the tyre's equator is larger than the outer end height (H2) defined as the height in the radial direction at the outermost end (P2) of the inner surface (E) of the belt layer (10) in the tyre's axis direction and the belt camber quantity (H) defined as difference (H1-H2) between the equator height (H1) and the outer end height (H2) is 6% or more of the belt width (W) defined as the length between the outer ends (P2) of the inner surface of the belt layer (10) in the axial direction of the tyre, characterised in that the carcass cords are made of an elastic cord having a stretch S5 (%) at 5kg load of 5 to 10, a stretch S10 (%) at 10kg load of 9 to 15 and a stretch S20 at 20kg load of 14 to 20.

2. A tyre according to claim 1 characterised in that each of said belt plies (10) has belt cords inclined at an angle of 5 degrees or less to the tyre's equator (CO) and a cut breaker (14) having cords inclined at an angle of 5 degrees to 40 degrees is provided inside or outside the said belt layer (10) in the radial direction.

3. A tyre according to claim 1 or 2 characterised in that each of said carcass cords has a stretch S5 (%) at 5kg load of 5 to 8.

4. A tyre according to claim 2 characterised in that each of said belt cords has a stretch S5 (%) at 5kg load of 3 to 6.

5. A tyre according to any of claims 1 to 4 characterised in that each of said carcass cords is made of an elastic cord having a divided value D5 (%/d) of the stretch S5% at 5kg loading divided by the actual total denier number of the cord d of 0.000735 to 0.00147.

6. A tyre according to any of claims 1 to 5 characterised in that each of said carcass cords has a divided value D10 (%/d) of the stretch S10 (%) at 10kg load divided by the actual total denier number d of the cord of 0.00132 to 0.00221 and a divided value D20 (%/d) of the stretch S20 (%) at 20kg load divided by the actual total denier number d of the cord of 0.00206 to 0.00294.

7. A tyre according to any of claims 2 to 4 characterised in that each of said belt cords has a divided value D5 (%/d) of the stretch S5 (%) at 5kg load divided by the actual total denier number d of the cord being 0.000385 to 0.000769.

**Patentansprüche**

1. Hochgeschwindigkeits-Radialreifen für schwere Belastung mit einer Karkasse (7), die aus mindestens einer Karkasslage zusammengesetzt ist, die mit einem Winkel von 70 bis 90° zum Reifenäquator geneigte Karkasskorde besitzt und sich von einem Laufstreifenteil (5) durch einen Seitenwandteil (4) erstreckt und um einen Wulstkern (2) in jeweils einem der beiden Wulstteile (3) herumgefaltet ist, und einer Gürtellage (10), die zusammengesetzt ist aus einer Vielzahl von Gürtellagen, die radial außerhalb der Karkasse (7) und innerhalb des Laufstreifenteils (5) angeordnet sind, wobei, wenn der Reifen auf eine Standardfelge (R) aufgezogen und auf seinen Standard-Innendruck aufgepumpt ist, die Äquatorhöhe (H1), bestimmt als die Höhe in der Radialrichtung eines Überquerungspunktes (P1), an dem die Innenfläche (E) der Gürtellage (10) in Radialrichtung die Fläche (CO) des Reifenäquators schneidet, größer als die Außenendhöhe (H2) ist, welche bestimmt ist durch die Höhe in Radialrichtung am äußersten Ende (P2) der Innenfläche (E) der Gürtellage (10) in Reifenachsenrichtung, und die als die Differenz (H1-H2) zwischen der Äquatorhöhe (H1) und der Außenendhöhe (H2) definierte Gürtel-Wölbungshöhe (H) 6% oder mehr der Gürtelbreite (W) beträgt, welche bestimmt ist als die Länge zwischen den Außenenden (P2) der Innenfläche der Gürtellage (10) in Axialrichtung des Reifens, dadurch gekennzeichnet, daß die Karkasskorde aus einem elastischen Kord hergestellt sind mit einer Streckung S5 (%) bei 5 kg Belastung von 5 bis 10, einer Streckung S10 (%) bei 10 kg Belastung von 9 bis 15 und einer Streckung S20 bei 20 kg Belastung von 14 bis 20.

2. Reifen nach Anspruch 1, dadurch gekennzeichnet, daß jede Gürtellage (10) Gürtelkorde besitzt, die mit einem Winkel von 5° oder weniger zum Reifenäquator (CO) geneigt sind und daß ein Schneidkissen oder einen Schneidgürtel (14) mit mit einem Winkel von 5° bis 40° geneigte Korden in Radialrichtung inerhalb oder außerhalb der Gürtellage (10) vorgesehen ist.

3. Reifen nach Anspruch 1 oder 2, dadurch gekennzeichnet, daß jeder Karkasskord eine Streckung S5 (%) bei 5 kg Belastung von 5 bis 8 besitzt.

4. Reifen nach Anspruch 2, dadurch gekennzeichnet, daß jeder Gürtelkord eine Streckung S5 (%) bei 5 kg Belastung von 3 bis 6 besitzt.

5. Reifen nach einem der Ansprüche 1 bis 4, dadurch gekennzeichnet, daß jeder Karkasskord aus einem elastischen Kord gefertigt ist, der einen geteilten Wert D5 (%/d) der Streckung S5% bei 5 kg Belastung, dividiert durch die aktuelle Gesamt-Denier-Zahl des Kordes d, von 0,000735 bis 0,00147 besitzt.

**6.** Reifen nach einem der Ansprüche 1 bis 5, dadurch gekennzeichnet, daß jeder Karkasskord einen geteilten Wert D10 (%/d) der Streckung S10 (%) bei 10 kg Belastung, geteilt durch die aktuelle Gesamt-Denier-Zahl d des Kordes, von 0,00132 bis 0,00221 besitzt und einen geteilten Wert D20 (%/d) der Streckung S20 (%) bei 20 kg Belastung, dividiert durch die aktuelle Gesamt-Denier-Zahl d des Kordes, von 0,00206 bis 0,00294.

**7.** Reifen nach einem der Ansprüche 2 bis 4, dadurch gekennzeichnet, daß jeder Gürtelkord einen geteilten Wert D5 (%/d) der Streckung S5 (%) bei 5 kg Belastung, dividiert durch die aktuelle Gesamt-Denier-Zahl d des Kordes, von 0,000385 bis 0,000769 besitzt.

## Revendications

**1.** Pneumatique à carcasse radiale pour vitesses élevées et lourdes charges, comprenant une carcasse (7) composée d'au moins une nappe de carcasse ayant des câblés de carcasse inclinés suivant un angle de 70 à 90° par rapport à l'équateur du pneumatique et allant d'une partie (5) de bande de roulement dans une partie de flanc (4) et repliée autour d'une tringle (2) dans chacune de deux parties de talon (3), et une couche de ceinture (10) composée de plusieurs nappes de ceinture qui sont placées radialement à l'extérieur de la carcasse (7) et à l'intérieur de la partie de bande de roulement (5), dans lequel, lorsque le pneumatique est monté sur une jante normale (R) et gonflé à sa pression interne normale, la hauteur à l'équateur (H1) qui est la hauteur en direction radiale d'un point (P1) de recoupement de la surface interne (E) de la couche de ceinture (10) en direction radiale et de la surface (CO) de l'équateur du pneumatique, est supérieure à la hauteur de l'extrémité externe (H2) définie comme étant la hauteur en direction radiale à l'extrémité externe (P2) de la surface interne (E) de la couche de ceinture (10) dans la direction de l'axe du pneumatique, et l'amplitude de la cambrure (H) de la ceinture, qui est définie comme étant la différence (H1 - H2) entre la hauteur à l'équateur (H1) et la hauteur à l'extrémité externe (H2), est supérieure ou égale à 6 % de la largeur (W) de la ceinture qui est déterminée comme étant la longueur comprise entre les extrémités externes (P2) de la surface interne de la couche (10) de ceinture dans la direction axiale du pneumatique, caractérisé en ce que les câblés de carcasse sont formés d'un câblé élastique ayant un allongement S5 (%) pour une charge de 49 N (5 kg) compris entre 5 et 10, un allongement S10 (%) pour une charge de 98 N (10 kg) compris entre 9 et 15, et un allongement S20 (%) pour une charge de 196 N (20 kg) compris entre 14 et 20.

**2.** Pneumatique selon la revendication 1, caractérisé en ce que chacune des nappes (10) de ceinture a des câblés de ceinture inclinés d'un angle de 5° ou moins par rapport à l'équateur (CO) du pneumatique, et une nappe sommet coupée (14) ayant des câblés faisant un angle compris entre 5 et 40° et placés à l'intérieur ou à l'extérieur de la couche de ceinture (10) dans la direction radiale.

**3.** Pneumatique selon la revendication 1 ou 2, caractérisé en ce que chacun des câblés de carcasse a un allongement S5 (%) pour une charge de 49 N (5 kg) compris entre 5 et 8.

**4.** Pneumatique selon la revendication 2, caractérisé en ce que chacun des câblés de ceinture a un allongement S5 (%) pour une charge de 49 N (5 kg) compris entre 3 et 6.

**5.** Pneumatique selon l'une quelconque des revendications 1 à 4, caractérisé en ce que chacun des câblés de carcasse est formé d'un câblé élastique ayant une valeur D5 (%/d) de l'allongement S5 (%) pour une charge de 49 N (5 kg) divisé par le nombre réel total de deniers (d) du câblé comprise entre 0,000735 et 0,00147.

**6.** Pneumatique selon l'une quelconque des revendications 1 à 5, caractérisé en ce que chacun des câblés de carcasse a une valeur D10 (%/d) de l'allongement S10 (%) pour une charge de 98 N (10 kg) divisé par le nombre réel total de deniers (d) du câblé comprise entre 0,00132 et 0,00221 et une valeur D20 (%/d) de l'allongement S20 (%) pour une charge de 196 N (20 kg) divisé par le nombre réel total de deniers (d) du câblé comprise entre 0,00206 et 0,00294.

**7.** Pneumatique selon l'une quelconque des revendications 2 à 4, caractérisé en ce que chacun des câblés de ceinture a une valeur D5 (%/d) de l'allongement S5 (%) pour une charge de 49 N (5 kg) divisé par le nombre réel total de deniers (d) du câblé comprise entre 0,000385 et 0,000769.

FIG.1

FIG.2

FIG.3

FIG.4(A)

FIG.4(B)

FIG.5

FIG.6(A)

FIG.6(B)

Example 1

Embodiment 2

D

100% Load
(Internal pressure)
15.5 Kg/cm²

D

Embodiment 2

Example 1

200% Load
(Internal pressure)
15.5 Kg/cm²

EP 0 385 639 B1

FIG.7

Example 1

Embodiment 2

Position P5

Contact pressure

(kg/cm²)
70
60
50
40
30
20
10

P5
P3
r

○
△ } Position P3

100%  200%

Load

FIG.8

A
D
B
C

18